# EUROPÄISCHE PATENTANMELDUNG

(11) **EP 4 534 322 A1**
(43) Veröffentlichungstag der Anmeldung: **09.04.2025**
(21) Anmeldenummer: 24195364.5
(22) Anmeldetag: 20.08.2024
(51) Int. Cl.: B60L 3/00, B60L 3/12, B60L 58/12, B60L 58/16, G01R 31/385, G01R 31/392, H01M 10/48, B60L 53/80, G01R 31/367

(54) **VERFAHREN ZUM ÜBERWACHEN UND NACHVERFOLGEN EINES ELEKTROCHEMISCHEN ENERGIESPEICHERS EINES ELEKTRISCH ANTREIBBAREN FAHRZEUGS**

(30) Priorität: 19.09.2023 DE 102023209062
(71) Anmelder: Robert Bosch GmbH, 70442 Stuttgart (DE)
(72) Erfinder: Maurer, Martina, 71277 Rutesheim (DE); Woll, Christoph, 70839 Gerlingen (DE)

(57) **Zusammenfassung**

Verfahren, insbesondere computer-implementiertes Verfahren, zum Überwachen und Nachverfolgen eines elektrochemischen Energiespeichers eines elektrisch antreibbaren Fahrzeugs.

## Beschreibung

Die Erfindung geht aus von einem Verfahren, insbesondere einem computerimplementierten Verfahren, zum Überwachen und Nachverfolgen eines elektrochemischen Energiespeichers eines elektrisch antreibbaren Fahrzeugs, einer Vorrichtung zur Durchführung, sowie einer Verwendung des Verfahrens gemäß dem Oberbegriff der unabhängigen Ansprüche.

### Stand der Technik

Zukünftig werden mehr und mehr Fahrzeuge miteinander vernetzt ("connected"), das heißt sie stehen alle über eine Cloud miteinander in Verbindung, an welche die Daten der Fahrzeuge oder von Fahrzeug-Komponenten übertragen werden.

Auf diese Daten kann der Hersteller und der Fahrzeughalter zugreifen. Diesen Daten bedienen sich Algorithmen, beispielsweise zur Bestimmung eines Alterungszustands (SOH), eines prädizierten Alterungszustands (SOH_{präd}), und/oder Erstellung eines Nutzungszertifikats.

Für ein vernetztes elektrisch antreibbares Fahrzeug, beispielsweise einen Lastkraftwagen ("e-LKW"), liegen diese Daten ebenfalls in der Cloud vor und werden aktuell über diese Verwendung hinaus nicht weiter herangezogen.

Bei elektrischen antreibbaren Personenkraftwagen ("EV") ist üblicherweise kein teurer Batterietausch erforderlich, im Gegensatz zu elektrisch antreibbaren Lastkraftwagen, welche aufgrund einer anderen Nutzungsweise und eines anderen Ladeverhaltens, beispielsweise häufige Schnellladevorgänge in den vorgeschriebenen Lenkpausen, die Batterie mehr stressen, was dazu führt, dass diese viel schneller altert und ggf. ausgetauscht werden muss.

Die Information, wann und ob ein Tausch ansteht, kann einerseits von der Werkstatt zwecks besserer Planung des Werkstattaufenthalts, auch in Abhängigkeit der Verfügbarkeit einer neuen Batterie, als auch von der Spedition zwecks besserer Kostenplanung, maximaler Ausnutzung der Batterie und des elektrisch antreibbaren Lastkraftwagen genutzt werden. Insbesondere für teure Komponenten, wie beispielsweise die Batterie, oder Komponenten, welche nicht lagernd vorrätig sind, sind solche Informationen vorab hilfreich.

Das Dokument DE 10 2020 201 697 B3 offenbart ein Verfahren zur Kategorisierung einer Batterie hinsichtlich ihrer weiteren Handhabungseignung.

Das Dokument DE 10 2020 206 260 A1 offenbart ein Verfahren und Prüfsystem zum Prüfen eines Zustands einer Batterie in einem Fahrzeug.

Es ist Aufgabe der vorliegenden Erfindung, den Stand der Technik weiter zu verbessern. Diese Aufgabe wird gelöst durch die Merkmale der unabhängigen Ansprüche.

### Offenbarung der Erfindung

### Vorteile der Erfindung

Die erfindungsgemäße Vorgehensweise mit den kennzeichnenden Merkmalen der unabhängigen Ansprüche weist demgegenüber den Vorteil auf, dass das Verfahren folgende Schritte umfasst:
a) Ermitteln einer Mehrzahl von Energiespeicherkenngrößen, welche eine Angabe über eine Nutzungsart einer vergangenen Nutzung des elektrochemischen Energiespeichers umfassen;
b) Bereitstellen eines Nutzungszertifikats, das mindestens einer der Energiespeicherkenngrößen umfasst;
c) Speichern des Nutzungszertifikats in einer Datenbank einer Zentraleinheit;
d) Bereitstellen eines Werkstattzertifikats, welches mindestens eine der ermittelten Energiespeicherkenngrößen umfasst und einen momentanen Zustand des elektrochemischen Energiespeichers repräsentiert;
e) Ermitteln einer Handlungsempfehlung in der Zentraleinheit auf Basis mindestens einer der ermittelten Energiespeicherkenngrößen; und
f) Bereitstellen der Handlungsempfehlung;

Vorteilhafterweise kann ein Fahrzeughalter, beispielsweise ein Spediteur, vor einer turnusmäßigen Inspektion des elektrisch antreibbaren Fahrzeugs das Werkstattzertifikat, welches aussagekräftige Energiespeicherkenngrößen enthält, und eine Handlungsempfehlung abrufen.

Weiter kann das Werkstattzertifikat auch den zeitlichen Verhalt des Ladeverhaltens anzeigen, um Änderungen an Einsatzszenarien des elektrisch antreibbaren Fahrzeugs und des davon abhängigen Ladeverhaltens vornehmen zu können, was für die zukünftige Nutzung des elektrisch antreibbaren Fahrzeugs entscheidend sein kann.

Im Anschluss daran wird eine Handlungsempfehlung für die Werkstatt und den Fahrzeughalter bereitgestellt, ob beispielsweise ein Tausch des elektrochemischen Energiespeichers zum jetzigen Zeitpunkt empfohlen wird, ob eine Inspektion auf einen früheren oder späteren Zeitpunkt verschoben werden sollte, da zu einem späteren Zeitpunkt dann beispielsweise der prädizierte Alterungszustand < 80% und damit die Restlebensdauer von 0 km erreicht sind, oder ob kein Tausch des elektrochemischen Energiespeichers vorgenommen werden soll, da das elektrisch antreibbare Fahrzeug zum Verkauf ansteht. Ferner werden Informationen bereitgestellt, welche auch zu besseren Kostenplanung für die Inspektion genutzt werden können.

Weitere vorteilhafte Ausführungsformen sind Gegenstand der Unteransprüche.

Das erfindungsgemäße Verfahren umfasst ferner folgenden Schritt:
g) Auswählen eines elektrochemischen Energiespeichers einer Vielzahl von elektrochemischen Energiespeichern auf Basis der Handlungsempfehlung für einen Tausch mit dem elektrochemischen Energiespeicher des elektrisch antreibbaren Fahrzeugs.

Das Werkstattzertifikat und die Handlungsempfehlung sind insbesondere für eine Werkstatt hilfreich. Elektrochemische Energiespeicher sind in der Regel keine Komponenten, die eine Werkstatt üblicherweise auf Lager hat. Einerseits sind dies sehr teure Komponenten und andererseits altern die Komponenten kalendarisch im Lager. Zudem können sich Hersteller oder Zellchemie ändern. Durch das automatisierte Auswählen eines elektrochemischen Energiespeichers auf Basis der Handlungsempfehlung kann der elektrochemische Energiespeicher rechtzeitig vor dem Inspektionstermin bestellt oder produziert werden, so dass die Verfügbarkeit gewährleistet ist und die Inspektion schnell abgeschlossen werden kann, wodurch das elektrisch antreibbare Fahrzeug wieder schnell einsatzbereit ist.

Die Energiespeicherkenngrößen umfassen
- eine Anzahl bereits erfolgter Ladezyklen, Schnellladezyklen, Vollladezyklen und/oder Teilladezyklen,
- eine Temperatur und/oder Temperaturschwankungen, des elektrochemischen Energiespeichers,
- eine elektrische Klemmenspannung,
- eine Höhe von Lade- und/oder Entladeströmen,
- einen Alterungszustand (SOH),
- mindestens einen Stressfaktor, dem der elektrochemische Energiespeicher ausgesetzt war,
- einen prädizierten Alterungszustand (SOH_{präd}) für mindestens einen vorbestimmten künftigen Zeitpunkt,
- Identifizierungsinformationen des elektrochemischen Energiespeichers,
- Fehlerspeichereinträge, und/oder
- Angaben zur verbleibenden Restlebensdauer ("Remaining Useful Life") und/oder verbleibende Restnutzung ("Remainung Useful Distance")
des elektrochemischen Energiespeichers.

Da eine Lebensdauer eines elektrochemischen Energiespeichers aufgrund von häufigen Schnellladevorgängen sinkt und damit auch die Restlebensdauer, was insbesondere durch Ladevorgänge im Megawatt-Bereich weiter verstärkt wird, bedeutet dies, dass der elektrochemische Energiespeicher schneller seinen Alterungszustandswert < 80% erreicht und ausgetauscht werden sollte.

In Abhängigkeit von Einsatzszenarien des elektrisch antreibbaren Fahrzeugs, beispielsweise Fernverkehr, Nahverkehr, Stadtverkehr, stehen unterschiedlich viele Schnellladezyklen an.

Auf langen Strecken wird ein Ladevorgang im Megawatt-Bereich in kurzen Pausenzeiten unerlässlich werden, während auf kurzen Strecken fast ausschließlich über Nacht mit moderaten elektrischen Strömen der elektrochemische Energiespeicher schonend aufgeladen wird. Folglich kann der Kilometerstand des elektrisch antreibbaren Fahrzeugs für einen Tausch des elektrochemischen Energiespeichers als relevante Größe nicht herangezogen werden.

Für die Ermittlung der verbleibenden Restlebensdauer und/oder verbleibenden Restnutzung wird vorteilhafterweise ein mittels eines datenbasierten Alterungsmodells bestimmter Alterungszustand verwendet, um die Handlungsempfehlung für den betreffenden elektrochemischen Energiespeicher zu ermitteln.

Häufig fahren elektrisch antreibbare Fahrzeuge, insbesondere elektrisch antreibbare Lastkraftwagen, ähnliche oder gleiche Routen, sowohl im Fernverkehr als auch im Nahverkehr oder Stadtverkehr. Somit sind auch die Lastprofile mit den Betriebsgrößenverläufen sehr ähnlich, was eine Bestimmung des prädizierten Alterungszustands erleichtert, und zu präziseren Ergebnissen führt. Hiervon profitiert ein Fahrzeughalter, insbesondere ein Spediteur, da er anhand des Werkstattzertifikats eine verbleibende Restlebensdauer und/oder verbleibende Restnutzung präziser einschätzen kann.

Anhand von Energiespeicherkenngrößen wie Alterungszustand, prädizierter Alterungszustand, Anzahl Schnellladezyklen und weiterer Energiespeicherkenngrößen, kann vorteilhafterweise eine zuverlässige Aussage getroffen werden.

Das Alterungsmodell umfasst ein probabilistisches Modell, welches insbesondere mindestens ein Gaußprozessmodell umfasst, wobei eine Unsicherheit eines mit dem Alterungszustandsmodell ermittelten Alterungszustands bestimmt wird.

Vorteilhafterweise ist eine Vorrichtung umfassend ein mindestens ein Mittel vorgesehen, insbesondere ein elektronisches Batteriemanagementsteuergerät, welches zur Durchführung des erfindungsgemäßen Verfahrens eingerichtet ist.

Gemäß einer vorteilhaften Ausgestaltung der Erfindung ist ein Computerprogramm vorgesehen, umfassend Befehle, die bewirken, dass die Vorrichtung die Verfahrensschritte des erfindungsgemäßen Verfahrens ausführt.

Ferner ist ein maschinenlesbares Speichermedium vorgesehen, auf dem das Computerprogramm gespeichert ist.

Vorteilhafterweise findet das erfindungsgemäße Verfahren zum Überwachen und Nachverfolgen eines elektrochemischen Energiespeichers Verwendung für Elektrofahrzeuge, Brennstoffzellenfahrzeuge, Hybridfahrzeuge, Plug-In-Hybridfahrzeuge, Pedelecs oder E-Bikes.

### Kurzbeschreibung der Figuren

Ausführungsbeispiele der Erfindung sind in der Zeichnung dargestellt und in der nachfolgenden Beschreibung näher erläutert.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Ferner können die im Folgenden beschriebenen Merkmale einzeln oder in einer beliebigen Kombination einen Gegenstand der Erfindung darstellen, wenn sich aus dem Kontext nicht explizit das Gegenteil ergibt.

Es zeigen:
- Figur 1: eine schematische Darstellung eines dezentralen Systems einer Fahrzeugflotte, die über Kommunikationsverbindungen mit einer externen Zentraleinheit in Verbindung steht;
- Figur 2: eine schematische Darstellung eines funktionalen Aufbaus eines hybriden Alterungszustandsmodells;
- Figur 3: ein Flussdiagramm einer Ausführungsform eines erfindungsgemäßen Verfahrens zur Überwachung und Nachverfolgung eines elektrochemischen Energiespeichers.

### Detaillierte Beschreibung der Ausführungsbeispiele

Gleiche Bezugszeichen bezeichnen in allen Figuren gleiche Vorrichtungskomponenten.

Im Folgenden wird das erfindungsgemäße Verfahren anhand von elektrochemischen Energiespeichern in einer Vielzahl von elektrisch antreibbaren Kraftfahrzeugen als gleichartige technische Geräte beschrieben. In den Kraftfahrzeugen kann in einer Steuereinheit ein datenbasiertes Alterungszustandsmodell für den jeweilige elektrochemischen Energiespeicher implementiert sein. Das Alterungszustandsmodell kann, wie nachfolgend beschrieben, in einer fahrzeugexternen Zentraleinheit kontinuierlich basierend auf Verläufen von Betriebsgrößen und/oder Merkmalen der elektrochemischen Energiespeicher aus der Fahrzeugflotte aktualisiert bzw. nachtrainiert werden. Das Alterungszustandsmodell wird in der Zentraleinheit betrieben und zur Alterungsberechnung und Alterungsprädiktion eingesetzt.

Das obige Beispiel steht stellvertretend für eine Vielzahl von stationären oder mobilen Geräten mit netzunabhängiger Energieversorgung, wie beispielsweise Fahrzeuge (Elektrofahrzeuge, Pedelecs usw.), Anlagen, Werkzeugmaschinen, Haushaltsgeräte, IOT-Geräte und dergleichen, die über eine entsprechende Kommunikationsverbindung (z. B. LAN, Internet) mit einer geräteexternen Zentraleinheit (Cloud) in Verbindung stehen.

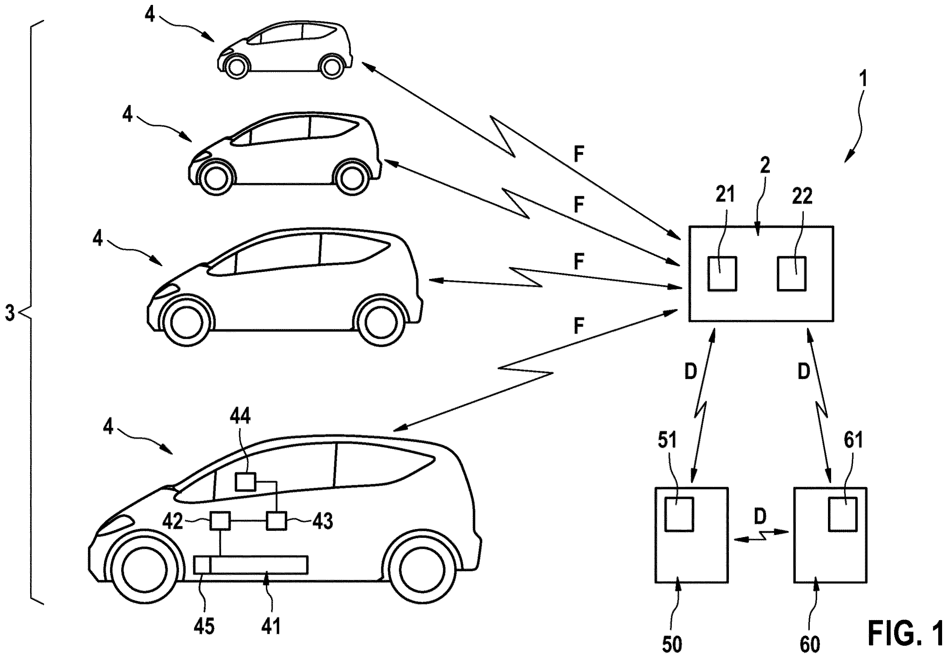

Figur 1 zeigt ein System 1 zum Sammeln von Flottendaten in einer Zentraleinheit 2 zur Erstellung und zum Betrieb sowie zur Auswertung eines Alterungszustandsmodells. Das Alterungszustandsmodell dient zur Bestimmung eines Alterungszustands eines elektrochemischen Energiespeichers 41 in einem Kraftfahrzeug 4. Figur 1 zeigt eine Fahrzeugflotte 3 mit mehreren Kraftfahrzeugen 4.

Eines der Kraftfahrzeuge 4 ist in Figur 1 detaillierter dargestellt. Die Kraftfahrzeuge 4 weisen jeweils einen wiederaufladbaren elektrochemischen Energiespeicher 41, einen elektrischen Antriebsmotor 42 und eine Steuereinheit 43 auf. Die Steuereinheit 43 ist mit einem Kommunikationsmodul 44 verbunden, das geeignet ist, Daten zwischen dem jeweiligen Kraftfahrzeug 4 und einer Zentraleinheit 2 (einer sogenannten Cloud) zu übertragen. Der elektrochemische Energiespeicher 41 weist ferner ein Batteriemanagementsystem 45 auf, das den elektrochemischen Energiespeicher 41 betreibt, laufend vermisst und überwacht. Das Batteriemanagementsystem 45 stellt Verläufe von Betriebsgrößen zur Verfügung, insbesondere eines elektrischen Stroms, einer elektrischen Klemmenspannung und einer Temperatur des elektrochemischen Energiespeichers 41.

Die Kraftfahrzeuge 4 senden an die Zentraleinheit 2 die Betriebsgrößen F, die zumindest Größen angeben, welche den Alterungszustand des elektrochemischen Energiespeichers 41 beeinflussen. Die Betriebsgrößen F können im Falle eines elektrochemischen Energiespeichers 41 Zeitreihen eines elektrischen Stroms, einer elektrischen Spannung, einer Temperatur und eines Ladezustands (SOC: State of Charge) des elektrochemischen Energiespeichers 41, sowohl auf Pack-, Modul- und/oder Zellebene, umfassen. Die Betriebsgrößen F werden in einem schnellen Zeitraster von 1 Hz bis 100 Hz erfasst und können in unkomprimierter und/oder komprimierter Form regelmäßig an die Zentraleinheit 2 übertragen werden.

Weiterhin können die Zeitreihen unter Ausnutzung von Kompressions-Algorithmen zwecks Minimierung des Datenverkehrs zur Zentraleinheit 2 im Abstand von mehreren Stunden bis zu mehreren Tagen blockweise an die Zentraleinheit 2 übertragen werden.

Die Zentraleinheit 2 weist eine Datenverarbeitungseinheit 21, in der das nachfolgend beschriebene Verfahren ausgeführt werden kann, und eine Datenbank 22 zum Speichern von Datenpunkten, Modellparametern, Zuständen und dergleichen auf.

In der Zentraleinheit 2 ist ein Alterungszustandsmodell implementiert, das als physikalisches Modell ausgebildet sein kann oder als datenbasiertes hybrides oder semi-hybrides Modell ausgebildet sein kann. Das Alterungszustandsmodell kann regelmäßig, d. h. z. B. nach Ablauf der jeweiligen Auswertungszeitdauer, verwendet werden, um basierend auf den zeitlichen Verläufen der Betriebsgrößen jeweils seit Inbetriebnahme des jeweiligen elektrochemischen Energiespeichers 41) und daraus ermittelten Betriebsmerkmalen eine Ermittlung des momentanen Alterungszustands des betreffenden elektrochemischen Energiespeichers 41 der zugeordneten Fahrzeugflotte vorzunehmen. Mit anderen Worten ist es möglich, basierend auf den Verläufen der Betriebsgrößen von einer der elektrochemischen Energiespeicher 41 der Kraftfahrzeuge 4 der zugeordneten Fahrzeugflotte 3 und den Betriebsmerkmalen, die sich aus diesen Verläufen der Betriebsgrößen ergeben oder daraus bestimmt werden, einen Alterungszustand der betreffenden elektrochemischen Energiespeicher 41 zu ermitteln.

Der Alterungszustand (SOH: State of Health) ist die Schlüsselgröße zur Angabe einer verbleibenden Kapazität des elektrochemischen Energiespeichers 41 oder verbleibenden Ladung. Der Alterungszustand stellt ein Maß für die über die kalendarische Alterung des elektrochemischen Energiespeichers 41 oder eines Moduls oder einer Zelle hinausgehende zyklische Alterung dar und kann als Kapazitätserhaltungsrate (Capacity Retention Rate, SOH-C) oder als Anstieg des Innenwiderstands (SOH-R) angegeben werden. Die Kapazitätserhaltungsrate SOH-C ist als Verhältnis der gemessenen momentanen Kapazität zu einer Anfangskapazität des vollständig aufgeladenen elektrochemischen Energiespeichers 41 angegeben. Die relative Änderung des Innenwiderstands SOH-R steigt mit zunehmender Alterung des elektrochemischen Energiespeichers 41 an.

Ein Flottenbetreiber 50, beispielsweise eine Spedition, oder ein Fahrer, Fahrzeughalter, und/oder eine Werkstatt 60, können mittels einem Kommunikationsmodul 51 bzw. 61 über eine Datenverbindung D mit der Zentraleinheit 2 und/oder untereinander kommunizieren.

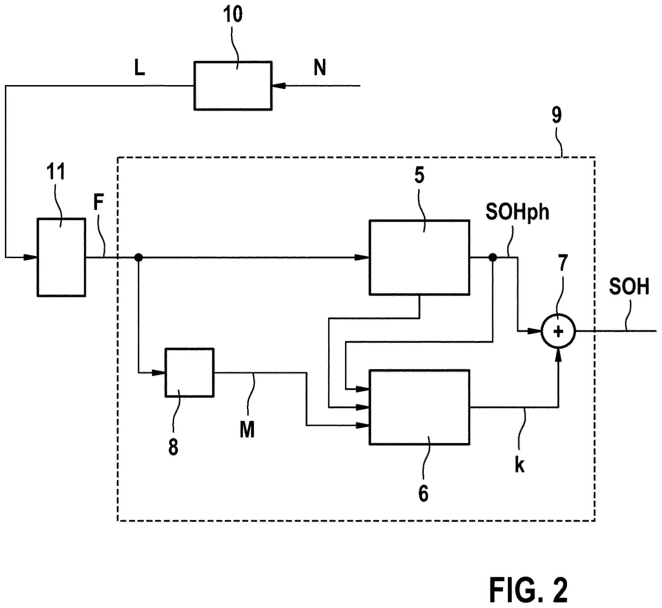

Figur 2 zeigt beispielhaft einen funktionalen Aufbau einer Ausführungsform eines hybriden Alterungszustandsmodells 9, das ein physikalisches Alterungsmodell 5 und ein datenbasiertes Korrekturmodell 6 aufweist. Diese erhalten Betriebsgrößen F bzw. Betriebsmerkmale M eines aktuellen Auswertungszeitraums/Alterungszeitpunkts (Alter des elektrochemischen Energiespeichers 41 seit Inbetriebnahmezeitpunkt). Die Betriebsmerkmale M des aktuellen Auswertungszeitraums/Alterungszeitpunkts werden in einem Merkmalsextraktionsblock 8 basierend auf den Zeitreihen der Betriebsgrößen F erzeugt.

Bei dem physikalischen Alterungsmodell 5 handelt es sich um ein nichtlineares, mathematisches Modell, das auf Differenzialgleichungen basiert. Ein solches Modell ist aus dem Stand der Technik bekannt und ermöglicht es, durch Auswerten von Differenzialgleichungen, welche die Elektrochemie des elektrochemischen Energiespeichers 41 in Bezug auf alterungsrelevante Modellparameter durch Zustandsfortschreibung basierend auf den Betriebsgrößenverläufen (seit dem Inbetriebnahmezeitpunkt bzw. einem Zeitpunkt, zu dem der interne Zustand bekannt ist, bis zu dem zu betrachteten aktuellen Zeitpunkt bzw. Auswertungszeitraum ) einen jeweiligen physikalischen Alterungszustand SOHph zu bestimmen. Das Auswerten des physikalischen Alterungsmodells 5 des Alterungszustandsmodells 9 mit Betriebsgrößenverläufen F, insbesondere seit Lebensdauerbeginn des elektrochemischen Energiespeichers 41, führt gemäß dem Zeitintegrationsverfahren dazu, dass sich ein interner Zustand des Gleichungssystems der physikalischen Differenzialgleichungen einstellt, der einem physikalischen internen Zustand des elektrochemischen Energiespeichers 41 entspricht.

Da das physikalische Alterungsmodell 5 auf physikalischen und elektrochemischen Gesetzmäßigkeiten basiert, umfassen die internen Zustände des physikalischen Alterungsmodells Größen, die physikalische Eigenschaften angeben, wie z. B. ein Gleichgewichtspotenzial für eine Anodennebenreaktion, einen Transferkoeffizienten für die Anodennebenreaktion mit einem ersten Elektrolyten, einen Anodenpolarisationsfaktor, eine SEI Leitfähigkeit, eine Abscheidungsrate, ein Gleichgewichtspotenzial für eine Kathodennebenreaktion, eine Nebenreaktionsrate an der Kathode; einen stromabhängigen Koeffizienten des mechanischen Stresses in dem aktiven Material der Anode, eine Gewichtung für den Kapazitätsverlust aufgrund Verlust von aktivem Material und dergleichen. Die internen Zustände können verwendet werden, um den physikalisch basierten Alterungszustand SOHph in Form einer Kapazitätserhaltungsrate (SOH-C) und/oder einer Innenwiderstandanstiegsrate (SOH-R) als lineare oder nichtlineare Abbildung der internen Zustände bereitzustellen.

Die durch das physikalische Alterungsmodell 5 bereitgestellten Modellwerte für den physikalischen Alterungszustand SOHph sind jedoch in bestimmten Situationen ungenau, und es ist daher vorgesehen, diese mit einer Korrekturgröße k zu korrigieren. Die Korrekturgröße k wird von dem datenbasierten Korrekturmodell 6 bereitgestellt.

Für die Bestimmung eines korrigierten auszugebenden Alterungszustands SOH werden die Ausgänge SOHph und k des physikalischen Alterungsmodells 5 und des Korrekturmodells 6, welches vorzugsweise als Gauß-Prozess-Modell ausgeführt ist, miteinander beaufschlagt. Insbesondere können diese in einem Summierblock 7 addiert oder multipliziert (nicht gezeigt) werden, um den auszugebenden modellierten Alterungszustand SOH zu einem aktuellen Auswertungszeitraum bzw. Alterungszeitpunkt zu erhalten. Die Konfidenz des Gaußprozesses kann im Additions-Fall weiterhin als Konfidenz des auszugebenden korrigierten Alterungswerts SOH des hybriden Modells verwendet werden.

Das Korrekturmodell 6 erhält eingangsseitig Betriebsmerkmale M, die aus den Verläufen der Betriebsgrößen F ermittelt und auch einen oder mehrere der internen elektrochemischen Zustände des Differentialgleichungssystems des physikalischen Alterungsmodells umfassen können.

Weiterhin kann das Korrekturmodell 6 eingangsseitig den aus dem physikalischen Alterungsmodell 5 erhaltenen physikalischen Alterungszustand SOHph erhalten. Die Betriebsmerkmale M des aktuellen Auswertungszeitraums werden in einem Merkmalsextraktionsblock 8 basierend auf den Zeitreihen der Betriebsgrößen F erzeugt. Zu den Betriebsmerkmalen M zählen weiterhin die internen Zustände aus dem Zustandsvektor des elektrochemischen physikalischen Alterungsmodells 5 sowie vorteilhafterweise der physikalische Alterungszustand (SOHph).

Die Betriebsmerkmale M können beispielsweise auf den Auswertungszeitraum bezogene Merkmale und/oder akkumulierte Merkmale und/oder über die gesamte bisherige Lebensdauer ermittelte statistische Größen umfassen. Insbesondere können als Betriebsmerkmale Merkmale aus Histogrammdaten ermittelt werden, die aus den Verläufen der Betriebsgrößen erstellt worden sind. So können beispielsweise Histogramme bezüglich des elektrischen Stroms über der Temperatur und dem Ladezustand des elektrochemischen Energiespeichers 41, ein Histogramm der Temperatur über dem Ladezustand des elektrochemischen Energiespeicher 41, ein Histogramm des elektrischen Stroms über einer Temperatur und ein Histogramm eines Entladestroms über der Temperatur des elektrochemischen Energiespeicher 41 erstellt werden. Ferner können als Betriebsmerkmale die akkumulierte Gesamtladung (Ah), eine durchschnittliche Kapazitätszunahme bei einem Ladevorgang (insbesondere für Ladevorgänge, bei denen die Ladungszunahme über einem Schwellenanteil [z. B. 20% ΔSOC] der gesamten Kapazität des elektrochemischen Energiespeichers 41 liegt), die Ladekapazität sowie ein Extremwert (z. B. ein lokales Maximum) der geglätteten differentiellen Kapazität während eines gemessenen Ladevorgangs mit ausreichend großem Hub des Ladezustands (geglätteter Verlauf von dQ/dU: Ladungsänderung dividiert durch Änderung der elektrischen Spannung des elektrochemischen Energiespeichers 41) oder die akkumulierte Fahrleistung jeweils seit Inbetriebnahme des elektrochemischen Energiespeichers 41 berücksichtigt werden.

Diese Größen werden vorzugsweise so umgerechnet, dass sie das reale Nutzungsverhalten bestmöglich charakterisieren und sind im Merkmalsraum normiert. Die Betriebsmerkmale M können insgesamt oder nur teilweise für das nachfolgend beschriebene Verfahren verwendet werden.

Andere Ausgestaltungen des hybriden Alterungszustandsmodells sind ebenfalls möglich, beispielsweise kann das hybride Alterungszustandsmodell als nichthybrides, rein datenbasiertes Modell basierend auf einem probabilistischen oder einem auf künstlicher Intelligenz basierendem Regressionsmodell, insbesondere einem Gauß-Prozess-Modell, oder einem Bayes'schen neuronalen Netz ausgebildet sein. Dieses ist trainiert, um einen modellierten Alterungszustand SOH aus einem Betriebsmerkmalspunkt, der durch aktuelle Betriebsmerkmale M des aktuellen Auswertungszeitraums/Alterungszeitpunkts bestimmt ist, bereitzustellen, wobei die Betriebsmerkmale M in einem Merkmalsextraktionsblock 8 basierend auf den Zeitreihen der Betriebsgrößen F ermittelt werden.

Die Betriebsmerkmale M und auch weitere Betriebsmerkmale, die in dem Merkmalsextraktionsblock 8 generiert werden, können zudem dem datenbasierten Korrekturmodell 6 zugeführt werden, das vorzugsweise als Gauß-Prozess-Modell ausgeführt ist. Dem datenbasierten Korrekturmodell ist vorteilhafterweise eine Reduktion des Merkmalsraums, speziell mithilfe einer Hauptkomponenten (PCA)-Transformation, vorgeschaltet. Das datenbasierte Korrekturmodell 6 dient zum Bereitstellen einer Korrekturgröße k zur Beaufschlagung des durch das physikalische Alterungsmodell ermittelten physikalischen Alterungszustands, um einen korrigierten Alterungszustand SOH für den betrachteten Zeitpunkt zu erhalten. Das datenbasierte Korrekturmodell 6 ist auf das Residuum des physikalischen Alterungsmodells 5 trainiert und mit real gemessenen Alterungszuständen als Labels trainiert und validiert.

Ferner können in dem datenbasierten Korrekturmodell 6 als Eingangsgrößen elektrochemische Zustände, die sich durch Auswerten des hybriden Alterungsmodells für einen Alterungszustand ergeben berücksichtigt werden. Elektrochemische Zustände können z. B. eine oder mehrere der folgende Größen umfassen: eine SEI-Schichtdicke, eine Änderung von zyklisierbarem Lithium aufgrund von Anoden/Kathoden-Nebenreaktionen, eine Rate der schnellen Aufnahme von Elektrolytlösungsmittel, eine Rate der langsamen Aufnahme von Elektrolytlösungsmitteln, eine Rate der Lithiumabscheidung, einen Verlust von aktivem Anodenmaterial und einen Verlust von aktivem Kathodenmaterial, sowie Informationen zu Impedanzen bzw. den Innenwiderständen.

Das Alterungszustandsmodell 9 kann in der Zentraleinheit 2 angewendet werden, wobei Betriebsgrößenverläufe F der einzelnen Fahrzeuge 4 an die Zentraleinheit 2 übermittelt werden. Alternative Ausführungsformen können vorsehen, dass das Alterungszustandsmodell 9 durch Übertragen von entsprechenden Modellparametern an das jeweilige Fahrzeug im Fahrzeug angewendet wird.

Ein alternatives Modell zur Bestimmung eines Alterungszustands des elektrochemischen Energiespeichers 41 als Zustand kann ein elektrochemisches Performance-Modell bilden, welches durch einen Parameterfit mit mindestens einem Gleichgewichtsparameter und mindestens einem kinetischen Modellparameter parametrisiert wird. Als Betriebsgrößen gehen in das Performance-Modell der elektrische Strom und die Temperatur ein und ermöglichen es, eine resultierende Spannung, einen Ladezustand sowie eine Leerlaufspannungskennlinie zu ermitteln. Diese ermöglichen es, einen Alterungszustand als Zustand zu berechnen.

Wie oben in Verbindung mit der Verwendung des hybriden Modells beschreiben, können aus den Betriebsgrößenverläufen Betriebsmerkmale abgeleitet werden, von denen einige als Stressfaktoren bestimmt werden können. So können beispielsweise die Häufigkeit von Schnellladevorgängen, einen Temperaturverlauf der Temperatur des elektrochemischen Energiespeichers 41, der durchschnittliche Amperestundendurchsatz im Fahrbetrieb und dergleichen als Stressfaktoren definiert werden.

Die Berechnung des Alterungszustands, und insbesondere das Nachverfolgen des Verlaufs des Alterungsverhaltens des betreffenden elektrochemischen Energiespeichers 41, ermöglicht zudem eine Prädiktion des Alterungszustands für einen vorbestimmten Prädiktionshorizont, wie beispielsweise fünf Monate. Sowohl die Berechnung als auch die Prognose des Alterungszustandes kann jeweils mit einer Angabe zur Konfidenz bereitgestellt werden, wobei die Unsicherheit bzw. Konfidenz mithilfe des probabilistischen Korrekturmodells, vorteilhafterweise mit dem Gaußprozess-Modell, berechnet wird. Diese Unsicherheit repräsentiert u. a. auch das verbleibende technische Risiko eines Käufers bei Durchführung eines Smart Contracts.

Eine Prädiktion des Alterungszustands für den vorbestimmten Prädiktionshorizont kann auf vielfältige Weise erfolgen und beispielsweise auf Extrapolationsverfahren basieren. Eine nachfolgend beschriebene Möglichkeit besteht darin, basierend auf vorgegebenen Nutzungsmustern Betriebsgrößenverläufe zu prädizieren, mit denen prädizierte Alterungszustände bestimmt werden können. Diese Möglichkeit ist jedoch nur beispielhaft und es bestehen zahlreiche weitere Möglichkeiten in dem Stand der Technik, ausgehend von einem aktuellen Alterungszustand prädizierte Alterungszustände basierend auf einem vorgegebenen Nutzungsmuster zu bestimmen.

Zur Prädiktion eines zukünftigen Alterungszustandsverlaufs wird ein Dynamikmodell 11 verwendet, um zeitliche Verläufe von Betriebsgrößen F, wie der elektrischen Spannung U und dem Ladezustand SOC, auf Basis eines Verlaufs mindestens einer Belastungsgröße wie dem Verlauf des elektrischen Stroms I und der Temperatur T, zu generieren und alle diese Betriebsgrößen F insgesamt, nämlich die zeitlichen Verläufe der elektrischen Spannung U, des Ladezustands SOC, des elektrischen Stroms I und gegebenenfalls der Temperatur T, als "künstliche" Betriebsgrößenverläufe dem hybriden Alterungszustandsmodell bereitzustellen. Für elektrochemische Energiespeicher 41 entsprechen somit die Verläufe der erzeugten Belastungsgrößen einem Teil der "künstlichen" Betriebsgrößenverläufe.

Das Dynamikmodell 11 hat also die Aufgabe, für das hybride Alterungszustandsmodell im Prädiktionsfall generierte (nicht reale, künstlich erzeugte) Zeitreihen bzw. Verläufe von Belastungsgrößen für die Erstellung von Betriebsgrößen F und/oder als zumindest einen Teil der Betriebsgrößen F bereitzustellen, mit denen eine Prädiktion des Verlaufs des Alterungszustands durch Fortschreiben des aktuellen Alterungszustands (basierend auf den seit Lebensdauerbeginn (Inbetriebnahme) erfassten Verläufen der Betriebsgrößen F) durchgeführt werden kann. Z. B. kann eine Spannungsantwort durch das Dynamikmodell bereitgestellt werden, nachdem es eingangsseitig mit Strom und Temperatur beaufschlagt wurde. Temperatur- und Stromverläufe können fahrerindividuell aus historischen Daten erlernt und für künftige Prädiktionen verwendet werden.

Das Dynamikmodell 11 kann verschiedenartig ausgestaltet sein, wie beispielsweise ein Ersatzschaltungsmodell, ein elektrochemisches Modell, ein Einzelpartikelmodell von elektrochemischen Energiespeicherzellen oder dergleichen. Das Dynamikmodell 11 kann insbesondere einem elektrochemischen Energiespeichermodell entsprechen, das Gleichgewichtszustände modelliert und sich in Ruhephasen an Zell-Spannungen kalibriert, um einen elektrischen Strom und Ladezustand aus einer elektrischen Spannung zu generieren. Alternativ kann das Dynamikmodell ein Energiespeicher-Performance-Modell zur Charakterisierung der System-Übertragungsfunktion ausgeführt sein, wobei die Nichtlinearität der Stromstärke über ein Butler-Volmer Tuning herausgerechnet wird.

Die Generierung der Betriebsgrößenverläufe aus den Verläufen der Belastungsgrößen kann in Abhängigkeit des resultierenden Alterungszustands SOH des elektrochemischen Energiespeichers 41 erfolgen, welche eine Aktualisierung des Dynamikmodells 11, speziell bezüglich seiner Parameter oder alternativ seiner Zustände bewirkt. Somit ändert sich das Übertragungsverhalten des Dynamikmodells 11 in Abhängigkeit des Alterungszustands des elektrochemischen Energiespeichers 41. Typischerweise erfolgt dieser Parameter-Update einmal pro (simuliertem) Monat während einer Simulation bzw. Prädiktion.

Die Berücksichtigung des Alterungszustands SOH erfolgt, indem entweder Parameter und/oder Zustände des Dynamikmodells 11 auf Basis des berechneten modellierten Alterungszustands SOH aktualisiert werden.

Um die Verläufe der Belastungsgrößen für die Prädiktion des Alterungszustands zu generieren, wird ein Nutzungsmustermodell 10 vorgesehen. Das Nutzungsmustermodell 10 setzt vorgegebene benutzerindividuelle Nutzungsmuster N in Verläufe von Belastungsgrößen um, die die Belastung des Energiespeichers 41 widerspiegeln, welcher der Energiespeicher 41 bei der durch das Nutzungsmuster angegebenen Nutzungs- und Betriebsweise ausgesetzt ist. Die Nutzungsmuster N führen also zu der Ausgabe eines zeitlichen Verlaufs eines elektrischen Stroms I und einer Temperatur T als Belastungsgrößen L durch das Nutzungsmustermodell 10, mit denen mithilfe des Dynamikmodells 11 der Satz von Betriebsgrößen F mit den Verläufen der elektrischen Spannung U und des Ladezustands SOC vervollständigt wird, um die künstlich generierten Verläufe der Betriebsgrößen F zu generieren.

Die Nutzungsmuster können durch Nutzungsparameter N definiert sein, welche benutzerindividuell durch das Nutzungsmustermodell 10, vorzugsweise unter Zuhilfenahme von datenbasierten Verfahren, erlernt werden, und dienen dazu, das Nutzungsverhalten eines Nutzers bzw. eines Antriebsstrangs bezüglich des betreffenden elektrochemischen Energiespeichers 41 zu simulieren.

Das Nutzungsmustermodell kann als ein rekurrentes neuronales Netz, wie z. B. ein LST oder GRU ausgebildet sein, insbesondere als ein Bayes`sches LSTM-Netz, ausgebildet sein und basierend auf Verläufen von Belastungsgrößen bzw. Betriebsgrößen F, die eine Art der Nutzung des Energiespeichers 41 angeben, trainiert sein. Die dabei zu berücksichtigenden Verläufe von Belastungsgrößen bzw. Betriebsgrößen F sollten auf einem Zeitraum gleicher Nutzungsart und gleicher Betriebsart des elektrochemischen Energiespeichers 41 basieren.

Die Nutzungsparameter N, die das Nutzungsmuster angeben, entsprechen dann den Modellparametern des Nutzungsmustermodells, d. h. im Falle eines neuronalen Netzes den Gewichtungen und Bias-Werten der einzelnen Neuronen. Weiterhin können Prior und Posterior-Verteilungen sowie Wahrscheinlichkeiten, die gemäß Bayes-Theorem auf Beobachtungen konditioniert wurden, als relevante Parameter berücksichtigt werden.

Die Nutzungsmuster können sich durch ein Training des Nutzungsmustermodells basierend auf bekannten zeitlichen Verläufen der Belastungsgrößen und/oder der Betriebsgrößen F bezüglich ihres kalendarischen Bezugs und bezüglich eines bestimmten Nutzers ergeben. D. h., das Nutzungsmustermodell wird eingangsseitig mit einer kalendarischen Zeitangabe und ausgangsseitig mit den Belastungsgrößen (Strom, Temperatur vorzugsweise als Zeitreihe) und/oder den Betriebsgrößen F in an sich für rekurrente neuronale Netze bekannter Weise trainiert. So kann durch Vorgabe einer kalendarischen Zeitangabe, wie des Datums und einer Uhrzeit, ein künstlicher Verlauf der Belastungsgrößen und/oder der Betriebsgrößen F generiert werden. Die kalendarische Zeitangabe kann ferner den Wochentag, den Monat und die Kenntnis über Feiertage enthalten und insbesondere durch Feature Engineering Saisonalitäten berücksichtigen.

Das Nutzungsmustermodell 10 kann so direkt aus Rohdaten der Verläufe der Belastungsgrößen L und/oder der Betriebsgrößen F ausgebildet werden. Für den elektrochemischen Energiespeicher 41 werden somit typische Muster des Stromprofils, z. B. wegen wiederkehrenden Pendler-Strecken & typische Stand- und Ruhezeiten und Lasten zu Temperaturbereichen erkannt und reproduzierbar gemacht.

Die Nutzungsparameter können alternativ auch Belastungsparameter sein, die beispielsweise die Nutzungsart und/oder Betriebsart des elektrochemischen Energiespeichers 41 kennzeichnen und statistisch erfassten Größen entsprechen können.

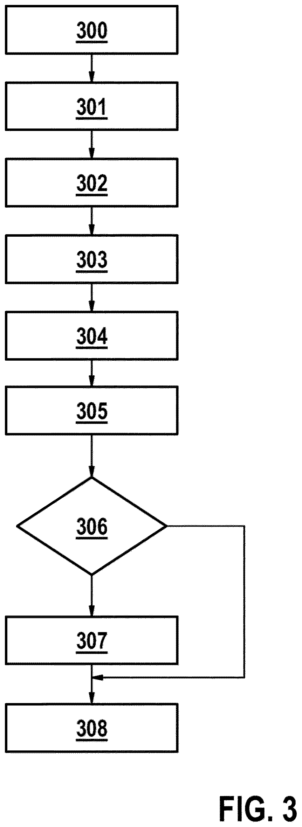

In Verbindung mit dem Flussdiagramm der Figur 3 wird ein Verfahren zum Überwachen und Nachverfolgen eines elektrochemischen Energiespeichers 41 beschrieben.

In Schritt 300 wird eine Mehrzahl von Energiespeicherkenngrößen, welche eine Angabe über eine Nutzungsart einer vergangenen Nutzung des elektrochemischen Energiespeichers 41 umfassen, ermittelt. Durch Auswertung der historischen Betriebsgrößenverläufe erhält man eine Reihe von Energiespeicherkenngrößen, die eine Anzahl bereits erfolgter Ladezyklen, Schnellladezyklen, Vollladezyklen und/oder Teilladezyklen, eine Temperatur und/oder Temperaturschwankungen, des elektrochemischen Energiespeichers 41, eine elektrische Klemmenspannung, eine Höhe von Lade- und/oder Entladeströmen, einen Alterungszustand (SOH) des elektrochemischen Energiespeichers 41, Stressfaktoren, denen der betreffende elektrochemische Energiespeicher 41 ausgesetzt war, einen prädizierten Alterungszustand für mindestens einen vorbestimmten künftigen Zeitpunkt (mindestens einen Prädiktionshorizont), Fehlerspeichereinträge und/oder Angaben zur verbleibenden Restnutzung ("Remaining Useful Life", "Remainung Useful Distance") als Kenngrößen für den individuellen elektrochemischen Energiespeicher 41 angeben.

In Schritt 301 werden die so ermittelten Batteriekenngrößen in einem digitalen Nutzungszertifikat bereitgestellt.

In Schritt 302 wird das digitale Nutzungszertifikat für den individuellen elektrochemischen Energiespeicher 41 gespeichert. Insbesondere kann mindestens ein Zustand mit Konfidenz gespeichert werden. Das digitale Nutzungszertifikat kann zusätzlich Angaben über das elektrisch antreibbare Fahrzeug 4 einschließlich eindeutiger Identifizierungsinformationen über das elektrisch antreibbare Fahrzeug 4, wie beispielsweise eine Identifikationsnummer des elektrochemischen Energiespeichers 41 oder alternativ eine FahrzeugIdentifikationsnummer, eine gesamte Fahrleistung, Herstellungsdatum und dergleichen, enthalten und diese mit den Angaben über den darin eingesetzten elektrochemischen Energiespeicher 41 einschließlich einer Identifikationsnummer, Lebensdauer (kalendarisches Alter), Nominaldaten, wie Speicherkapazität, Herstellungsdatum sowie den ermittelten Kenngrößen des elektrochemischen Energiespeichers 41 ergänzen. Weiterhin können kumulative Stressfaktoren oder Zeitreihenverläufe von Stressfaktoren, wie z. B. Lasthistogramme, gespeichert werden. Speziell können diese den Betriebsmerkmalen des hybriden Alterungszustandsmodells entsprechen.

Das so ermittelte Nutzungszertifikat, das die oben beschriebenen Angaben zumindest teilweise umfasst, wird in Schritt 302 verschlüsselt, insbesondere mithilfe eines Private-Key/Public-Key-Konzepts, gespeichert.

Bekommt nun ein Fahrer des elektrisch antreibbaren Fahrzeugs 4 in einem Cockpitinstrument angezeigt, dass beispielsweise innerhalb von 30 Tagen oder 10.000 km eine Inspektion des elektrisch antreibbaren Fahrzeugs 4 fällig wird, so kann ein Flottenbetreiber 50 einen "passenden" Termin mit einer Werkstatt 60 über die Datenverbindung D vereinbaren.

In Schritt 303 wird ein Werkstattzertifikat, welches mindestens eine der ermittelten Energiespeicherkenngrößen umfasst und einen momentanen Zustand des elektrochemischen Energiespeichers 41 repräsentiert, bereitgestellt.

Der Flottenbetreiber 50 kann sich über die gesicherte Datenverbindung D mit der Zentraleinheit 2 verbinden. Ferner kann er Daten beispielsweise eine Fahrzeugidentifikationsnummer an die Zentraleinheit 2 übermitteln. Die Zentraleinheit 2 stellt dem Flottenbetreiber 50 das Werkstattzertifikat über die Datenverbindung D zur Verfügung. Das Werkstattzertifikat für den Flottenbetreiber 50 umfasst Energiespeicherkenngrößen in aufbereiteter Form sowie zusätzlich zeitlich zurückliegende Betriebsgrößenverläufe, Fehlerspeichereinträge, sowie konkrete Angaben zur verbleibenden Restnutzungsdauer.

Das Werkstattzertifikat kann für den Flottenbetreiber 50 und die Werkstatt 60 unterschiedliche Darstellungen bereitstellen, da unterschiedliche Energiespeicherkenngrößen für diese relevant sind. So können den Flottenbetreiber 50 primär die Fragen "Wie lange kann das Fahrzeug noch mit dieser Batterie fahren?" und "Wie viele Kilometer kann das Fahrzeug noch mit dieser Batterie zurücklegen?" interessieren. Für den Flottenbetreiber werden dann die Energiespeicherkenngrößen verbleibende Restlebensdauer ("Remaining Useful Life") und verbleibende Restnutzung ("Remainung Useful Distance") bereitgestellt.

Alle weiteren Energiespeicherkenngrößen sind für den Flottenbetreiber 50 wenig hilfreich, diese sind jedoch für die Werkstatt 60 relevant, da diese vom Werkstattpersonal korrekt interpretiert und analysiert werden können. Diese Energiespeicherkenngrößen können in tabellarischer und/oder graphischer Form dargestellt werden. Vorteilhafterweise lassen sich die Energiespeicherkenngrößen auf ein Werkstatt-Testgerät übertragen.

In Schritt 304 wird eine Handlungsempfehlung in der Zentraleinheit 2 auf Basis mindestens einer der ermittelten Energiespeicherkenngrößen ermittelt.

In Schritt 305 wird die ermittelte Handlungsempfehlung bereitgestellt.

Anhand der vorliegenden Daten und der Handlungsempfehlung kann der Flottenbetreiber 50 entscheiden, wann er die Inspektion in Verbindung mit oder ohne einen Tausch des elektrochemischen Energiespeichers 41 ausführen möchte, insbesondere im Zusammenhang je älter das elektrisch antreibbare Fahrzeug 4 ist und auf welchen Strecken dies unterwegs war und zukünftig sein soll.

In Schritt 306 wird auf Basis der Handlungsempfehlung geprüft, ob ein Tausch des elektrochemischen Energiespeichers 41 notwendig ist. Ist kein Tausch notwendig, wird das Verfahren in Schritt 308 fortgesetzt.

Je nach geschätztem Zeitpunkt für das Erreichen der verbleibenden Restlebensdauer und verbleibenden Restnutzung des elektrochemischen Energiespeichers 41, den Startbedingungen für die Inspektion, der Verfügbarkeit des elektrisch antreibbaren Fahrzeugs 4, einer maximalen Ausnutzung der Speicherkapazität des elektrochemischen Energiespeichers 41, Terminen, Auftragslage, Finanzlage und/oder Nutzungsszenarien entscheidet er, wann das elektrisch antreibbare Fahrzeug 4 für eine Inspektion mit/ohne Tausch des elektrochemischen Energiespeichers 41 zur Verfügung zu stehen hat und die Arbeiten durchgeführt werden sollen.

Einen Terminvorschlag sendet der Flottenbetreiber 50 über die Datenverbindung D an die Werkstatt 60, welche vor einem Werkstattbesuch das Werkstattzertifikat und die Handlungsempfehlung abruft. Für die Werkstatt 60 stehen alle Energiespeicherkenngrößen zur Verfügung. Für die Werkstatt 60 sind neben der verbleibenden Restlebensdauer und verbleibenden Restnutzung auch die Anzahl an Schnellladezyklen relevant, um daraus eine stärkere Alterung des elektrochemischen Energiespeichers 41 erkennen zu können, was für die zukünftige Nutzung des elektrisch antreibbaren Fahrzeugs 4 entscheidend ist, der Alterungszustand, der prädizierte Alterungszustand, elektrische Spannungsverläufe, welche Hinweise auf Lithium-Plating, insbesondere wegen Schnellladenvorgängen, oder Tiefentladen, oder ständiges Vollladen, geben, sowie weitere relevante Energiespeicherkenngrößen, um alle erforderlichen Ersatz- oder Tauschkomponenten vor Ort zu haben, wenn das elektrisch antreibbare Fahrzeug 4 in die Werkstatt kommt, damit die Arbeiten möglichst rasch abgeschlossen werden können und das elektrisch antreibbare Fahrzeug 4 dem Flottenbetreiber 50 bzw. Speditionsunternehmen wieder zur Verfügung steht.

Dadurch ist bereits vor dem Eintreffen des elektrisch antreibbaren Fahrzeugs 4 bekannt, wie der aktuelle Status, insbesondere des elektrochemischen Energiespeichers 41 ist. Ein Auslesen des Fehlerspeichers kann entfallen, die Werkstatt 60 ist auf die zu verrichteten Arbeiten an dem Fahrzeug 4 und dem elektrochemischen Energiespeicher 41 bereits eingestellt.

In Schritt 307 wird mindestens ein elektrochemischer Energiespeichers einer Vielzahl von elektrochemischen Energiespeichern auf Basis der Handlungsempfehlung für einen Tausch mit dem elektrochemischen Energiespeicher 41 des elektrisch antreibbaren Fahrzeugs 4 in Abhängigkeit des Vergleichs ausgewählt.

In Schritt 308 wird das Verfahren beendet.

## Patentansprüche

1. Verfahren, insbesondere computer-implementiertes Verfahren, zum Überwachen und Nachverfolgen eines elektrochemischen Energiespeichers (41) eines elektrisch antreibbaren Fahrzeugs (4) mit folgenden Schritten:
a) (300) Ermitteln einer Mehrzahl von Energiespeicherkenngrößen, welche eine Angabe über eine Nutzungsart einer vergangenen Nutzung des elektrochemischen Energiespeichers (41) umfassen;
b) (301) Bereitstellen eines Nutzungszertifikats, das mindestens einer der Energiespeicherkenngrößen umfasst;
c) (302) Speichern des Nutzungszertifikats in einer Datenbank (22) einer Zentraleinheit (2);
d) (303) Bereitstellen eines Werkstattzertifikats, welches mindestens eine der ermittelten Energiespeicherkenngrößen umfasst und einen momentanen Zustand des elektrochemischen Energiespeichers (41) repräsentiert;
e) (304) Ermitteln einer Handlungsempfehlung in der Zentraleinheit (2) auf Basis mindestens einer der ermittelten Energiespeicherkenngrößen; und
f) (305) Bereitstellen der Handlungsempfehlung;

2. Verfahren zum Überwachen und Nachverfolgen eines elektrochemischen Energiespeichers (41) eines elektrisch antreibbaren Fahrzeugs (4) nach Anspruch 1, ferner umfassend folgenden Schritt:
g) (307) Auswählen eines elektrochemischen Energiespeichers einer Vielzahl von elektrochemischen Energiespeichern auf Basis der Handlungsempfehlung für einen Tausch mit dem elektrochemischen Energiespeicher (41) des elektrisch antreibbaren Fahrzeugs (4).

3. Verfahren zum Überwachen und Nachverfolgen eines elektrochemischen Energiespeichers (41) eines elektrisch antreibbaren Fahrzeugs (4) nach einem der vorhergehenden Ansprüche, wobei die Energiespeicherkenngrößen
- eine Anzahl bereits erfolgter Ladezyklen, Schnellladezyklen, Vollladezyklen und/oder Teilladezyklen,
- eine Temperatur und/oder Temperaturschwankungen, des elektrochemischen Energiespeichers (41),
- eine elektrische Klemmenspannung,
- eine Höhe von Lade- und/oder Entladeströmen,
- einen Alterungszustand (SOH),
- mindestens einen Stressfaktor, dem der elektrochemische Energiespeicher (41) ausgesetzt war,
- einen prädizierten Alterungszustand (SOH_{präd}) für mindestens einen vorbestimmten künftigen Zeitpunkt,
- Identifizierungsinformationen des elektrochemischen Energiespeichers,
- Fehlerspeichereinträge, und/oder
- Angaben zur verbleibenden Restlebensdauer ("Remaining Useful Life") und/oder verbleibende Restnutzung ("Remainung Useful Distance")
des elektrochemischen Energiespeichers (41) umfassen.

4. Verfahren zum Überwachen und Nachverfolgen eines elektrochemischen Energiespeichers (41) eines elektrisch antreibbaren Fahrzeugs (4) nach einem der vorhergehenden Ansprüche, wobei für die Ermittlung der verbleibenden Restlebensdauer und/oder verbleibenden Restnutzung ein mittels eines datenbasierten Alterungsmodells bestimmter Alterungszustand verwendet wird, um die Handlungsempfehlung für den betreffenden elektrochemischen Energiespeicher (41) zu ermitteln.

5. Verfahren zum Überwachen und Nachverfolgen eines elektrochemischen Energiespeichers (41) eines elektrisch antreibbaren Fahrzeugs (4) nach einem der vorhergehenden Ansprüche, wobei das Alterungsmodell ein probabilistisches Modell umfasst, welches insbesondere mindestens ein Gaußprozessmodell umfasst, wobei eine Unsicherheit eines mit dem Alterungszustandsmodell ermittelten Alterungszustands bestimmt wird.

6. Vorrichtung umfassend ein mindestens ein Mittel, insbesondere ein elektronisches Batteriemanagementsteuergerät, welches eingerichtet ist, zur Durchführung eines der Verfahren nach einem der Ansprüche 1 bis 5.

7. Computerprogrammprodukt umfassend Befehle, die bei der Ausführung des Programms durch mindestens eine Datenverarbeitungseinrichtung diese veranlassen, die Schritte des Verfahrens nach einem der Ansprüche 1 bis 5 auszuführen.

8. Maschinenlesbares Speichermedium, umfassend Befehle, die bei der Ausführung durch mindestens eine Datenverarbeitungseinrichtung diese veranlassen, die Schritte des Verfahrens nach einem der Ansprüche 1 bis 5 auszuführen.

9. Verwendung eines Verfahrens zum Überwachen und Nachverfolgen eines elektrochemischen Energiespeichers (41) für Elektrofahrzeuge, Brennstoffzellenfahrzeuge, Hybridfahrzeuge, Plug-In-Hybridfahrzeuge, Pedelecs oder E-Bikes.
